(19) Europäisches Patentamt
European Patent Office
Office européen des brevets

(11) **EP 4 328 799 A1**

(12) **EUROPEAN PATENT APPLICATION**

(43) Date of publication:
**28.02.2024 Bulletin 2024/09**

(21) Application number: **22192386.5**

(22) Date of filing: **26.08.2022**

(51) International Patent Classification (IPC):
**G06N 3/0455** (2023.01)     **G06N 3/088** (2023.01)
**G06N 3/094** (2023.01)     **G06N 7/01** (2023.01)

(52) Cooperative Patent Classification (CPC):
**G06N 3/0455; G06N 3/088; G06N 3/094;
G06N 7/01**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Robert Bosch GmbH
70442 Stuttgart (DE)**

(72) Inventors:
• **Saseendran, Amrutha
71116 Gaertringen (DE)**
• **Keuper, Margret
57076 Siegen (DE)**
• **Skubch, Kathrin
60325 Frankfurt (DE)**

Remarks:
Amended claims in accordance with Rule 137(2)
EPC.

(54) **A METHOD FOR TRAINING DETERMINISTIC AUTOENCODERS**

(57)     A method (100) for training a deterministic autoencoder (1) for records (4) of measurement data, wherein the autoencoder (1) comprises an encoder (2) that maps a record (4) of measurement data as input to a representation (5) in a latent space that has a lower dimensionality than the input (4) in a deterministic manner and a decoder (3) that reconstructs a record (4#) of measurement data from the representation (5) in a deterministic manner, the method (100) comprising the steps of:
• providing (110) training records (4a) of measurement data;
• determining (120) adversarial records (4b) that do not belong to a distribution and/or domain to which the training records (4a) of measurement data belong;
• processing (130), by the encoder (2), both training records (4a) and adversarial records (4b) into respective representations (5a, 5b);
• reconstructing (140), by the decoder (3), records (4#) of measurement data from the representations (5a, 5b);
• evaluating (150) a loss function (6) that measures
∘ how similar the reconstructed records (4#) of measurement data are to the corresponding training records (4a), respectively adversarial records (4b); and
∘ how similar distributions of the representations (5a, 5b) are to a given prior distribution; and

• optimizing (160) parameters (1a) that characterize the behavior of the autoencoder (1) towards the goal that, when processing further training records (4a) and adversarial records (4b), the value (6a) of the loss function (6) improves.

Fig. 1

**Description**

The present invention relates to the training of deterministic autoencoders. The encoder part of such an autoencoder may be used in combination with a suitable task head to process measurement data with respect to a given task, such as classification.

Background

Supervised training of a neural network for the processing of measurement data with respect to a given task requires many training examples that are labelled with "ground truth". The training examples are processed by the network, and the parameters of the network are optimized such that the results outputted by the network for the training examples correspond to the respective "ground truth". The labelling of training examples with "ground truth" usually involves manual work and is therefore expensive.

To save at least part of the labelling work, encoder parts of autoencoder networks are combined with task heads. The autoencoder network (and thus the encoder) can be trained in an unsupervised manner; only the task head needs a supervised training with "ground truth".

Disclosure of the invention

The invention provides a method for training a deterministic autoencoder for records of measurement data. The autoencoder comprises an encoder that maps a record of measurement data as input to a representation in a latent space that has a lower dimensionality than the input in a deterministic manner and a decoder that reconstructs a record of measurement of data from the representation in a deterministic manner. In this context, "deterministic" means that, when one and the same input is processed by the autoencoder multiple times, the same result is obtained each and every time.

In particular, the measurement data may comprise images, such as still camera images, video images, thermal images or ultrasound images. In another example, the measurement data may comprise at least one point cloud that annotates arbitrary points in space with one or more measurement quantities. For example, radar data and lidar data is frequently acquired in the form of point clouds. In another example, the measurement data may comprise time series data, such as an audio signal or any other time-variable signal that is sampled at discrete points in time.

The method starts with providing training records of measurement data. Furthermore, adversarial records that do not belong to a distribution and/or domain to which the training records of measurement data belong are determined. In particular, the training records of measurement data may define a distribution and/or domain, and the adversarial records may be deliberately chosen to be outside this distribution and/or domain. Ideally, the adversarial records are at the same time similar to the training records. For example, they may be created out of one or more training records by modifying this one or more training records just enough to move it out of the distribution and/or domain of the training records. When creating adversarial examples for fooling a neural network, it is frequently the goal to achieve the greatest change in network output with the least modification of the input.

Both training records and adversarial records are processed by the encoder into respective representations. From these representations, records of measurement data are reconstructed by the decoder. A loss function that rates the representations and the reconstructed records is then evaluated. The loss function measures how similar the reconstructed records of measurement data are to the corresponding training records, respectively adversarial records ("reconstruction loss"). The loss function also measures how similar distributions of the representations are to a given prior distribution ("regularization loss").

Parameters that characterize the behavior of the autoencoder are optimized towards the goal that, when processing further training records and adversarial records, the value of the loss function improves.

A training of the autoencoder in this manner makes the autoencoder more robust against adversarial modification of the input. In particular, if a small modification of the input causes a drastic change in the reconstructed record, this is penalized by the reconstruction loss. At the same time, the regularization loss prevents the representations from exploring unexplored regions in the latent space of the representations. In particular, the regularization loss encourages that both the representations of the training records and the representations of the adversarial records are members of one single distribution rather than two clearly discernible distributions, and that this one single distribution is similar to the given prior distribution.

This is particularly important for applications where only the encoder part of the autoencoder is used further, e.g., to process measurement data in a first stage for onward processing by a task head. For the final result outputted by the task head, a good reconstruction of a record of measurement data from its representation does not matter because this reconstruction is not used. But if representations of adversarial records fall off the distribution of the representations of training records on which a task head has been trained, this may cause a drastic change to the final output of the task head.

In a particularly advantageous embodiment, the similarity between the distributions of the representations and the given prior distribution are obtained by measuring the similarity between respective empirical cumulative distribution functions, CDF. Any suitable metric may be used to quantify this similarity. For example, the CDF $\Phi(z)$ for a K-modal Gaussian Mixture Model, GMM, as the given prior may be written as

$$\Phi(z) = \int_{-\infty}^{z_1} \cdots \int_{-\infty}^{z_D} \sum_{k=1}^{K} w_k \frac{\exp\left(-\frac{1}{2}(t - \mu_k)^T \Sigma_k^{-1}(t - \mu_k)\right)}{\sqrt{2\pi}^D |\Sigma_k|} dt_1 \cdots dt_D,$$

wherein $\mu_k$ and $\Sigma_k$ are the mean and covariance matrix of the k-th mode in the model, $w_k$ is the weight of the k-th mode with $\sum_{k=1}^{K} w_k = 1$, $z = (z_1, ..., z_D)$ and $t = (t_1, ..., t_D)$.

In particular, the similarity between the empirical cumulative distribution functions is approximated by the similarity between respective marginal cumulative distribution functions. For example, the empirical CDF

$$\bar{F}_d(z) = \frac{1}{n} \sum_{n=1}^{N} 1_{[z_n]_d \leq z}$$

of the latent representations $\{z_1, ..., z_N\}$ in dimensions d = 1, ..., D may be regularizes towards the marginal CDFs

$$F_{GMM,d}(z) = \sum_{k=1}^{K} p_k \Phi\left(\frac{z - [\mu_k]_d}{[\Sigma_k]_{d,d}}\right) = \sum_{k=1}^{K} p_k \Phi\left(\frac{z - \mu_{k,d}}{\sigma_{k,d}}\right)$$

of the GMM prior. That is, the similarity between $\bar{F}_d(z)$ and $F_{GMM,d}(z)$ may be evaluated by means of any suitable metric. Herein, $[\cdot]_d$ indicates the d-th dimension of a vector, and $[\cdot]_{d,d}$ indicates the entry in row and column d of the matrix $\Sigma_k = \text{diag}(\sigma_{k,1}, ..., \sigma_{k,D})$. One example of a similarity metric is the statistical Kolmogorov-Smirnov test that may give rise to a loss function

$$\mathcal{L}_{KS,k}(z_{1,...,N}) = \frac{1}{D} \sum_{d=1}^{D} \text{MSE}_{n=1}^{N}\left(\bar{F}_d([z_n]_d), F_{GMM,d}([z_n]_d)\right).$$

In an example where the set of N training records $x_1, ..., x_N$ is augmented by N adversarial records $x_1^{\text{adv}}, ..., x_N^{\text{adv}}$, the representations $z_{1,...,N}$ of the training records $x_1,...,x_N$ are augmented by representations $z_{1,...,N}^{\text{adv}}$ of the adversarial records $x_1^{\text{adv}}, ..., x_N^{\text{adv}}$, and the Kolmogorov-Smirnov loss takes the form

$$\mathcal{L}_{KS,k}^{\text{aug}}(z_{1,...,N}, z_{1,...,N}^{\text{adv}}) = \frac{1}{2}\mathcal{L}_{KS,k}(z_{1,...,N}) + \frac{1}{2}\mathcal{L}_{KS,k}(z_{1,...,N}^{\text{adv}}).$$

Furthermore, ambiguities introduced by the approximation may be dis-ambiguated by a further contribution to the loss function, so as to keep the benefit of the approximation while at the same time avoiding that the ambiguities impede the convergence. Staying within the example of the GMM prior, one example for such a dis-ambiuation loss is

$$\mathcal{L}_{CV,k}\big(\mathbf{z}_{1,\dots,N}\big) = \frac{1}{D^2} \sum_{l,d=1}^{D} \big([\bar{\Sigma}]_{l,d} - [\Sigma^{GMM}]_{l,d}\big)^2,$$

wherein

$$\Sigma^{GMM} = \sum_{k=1}^{K} w_k \Sigma_k + \sum_{k=1}^{K} w_k (\mu_k - \bar{\mu})(\mu_k - \bar{\mu})^T,$$

$$\bar{\mu} = \frac{1}{k} \sum_{k=1}^{K} \mu_k,$$

and $\bar{\Sigma}$ is the empirical covariance matrix of the latent representations.

When the training records $x_1, \dots, x_N$ are augmented by the adversarial records $x_1^{\mathrm{adv}}, \dots, x_N^{\mathrm{adv}}$, this may take the form

$$\mathcal{L}_{CV,k}^{\mathrm{aug}}\big(\mathbf{z}_{1,\dots,N}, \mathbf{z}_{1,\dots,N}^{\mathrm{adv}}\big) = \frac{1}{2D^2} \sum_{l,d=1}^{2D} \left(\begin{bmatrix} \bar{\Sigma} & \bar{\Sigma}^{\mathrm{cross}} \\ \bar{\Sigma}^{\mathrm{cross}} & \bar{\Sigma}^{\mathrm{adv}} \end{bmatrix}_{l,d} - \begin{bmatrix} \Sigma^{GMM} & 0 \\ 0 & \Sigma^{GMM} \end{bmatrix}_{l,d}\right)^2.$$

Herein, $\bar{\Sigma}$ and $\bar{\Sigma}^{\mathrm{adv}}$ are the empirical covariance matrices of the latent representations $\mathbf{z}_{1,\dots,N}$ and their adversaries $\mathbf{z}_{1,\dots,N}^{\mathrm{adv}}$, respectively. $\bar{\Sigma}^{\mathrm{cross}}$ is the empirical cross-covariance between benign and adversarial samples. This regularization preserves the overall distribution even under adversarial attacks.

In a particularly advantageous embodiment, at least one adversarial record is chosen such that

- it is similar to at least one concrete training record, while
- its representation is different from the representation of that training record.

In this manner, for each training sample, at least one corresponding adversarial sample may be created. For example, this may be done using an optimization process wherein both conditions are optimization objectives, or wherein one condition is an optimization objective and the other one is a constraint.

For example, at least one adversarial record is chosen from a ball of a given radius $\varepsilon$ around a concrete training record such that its representation is most dissimilar to the representation of this concrete training record. In the nomenclature explained above, this may be expressed as an optimization problem

$$\arg\max_{\delta} \|g(x_n + \delta) - g(x_n)\|_2 \ \text{ such that } \|\delta\|_{\infty} < \varepsilon,$$

wherein $g(x_n + \delta)$ and $g(x_n)$ are the latent representations of $x_n + \delta$ and $x_n$, respectively. This a simple and computationally inexpensive way of obtaining adversarial records. There may be other manners of determining adversarial records that deliver even better adversarial records, at the price that this involves more computation time.

When the set of training examples is augmented by adversarial examples, and the autoencoder is then trained in the usual manner, the autoencoder will have to tackle the problem that a slight adversarial variation of the input may cause a large variation of the output. The better the adversarial examples are chosen, the harder it is for the autoencoder to learn to become more robust against the adversarial variations.

It is important that the autoencoder is a deterministic one, i.e., the same input always produces the same reconstructed output. In a variational autoencoder that treats the latent representation as parameters of a random distribution, draws a sample from this distribution and feeds this to the decoder, the effect of the optimization might be obscured by the stochastic properties of the decoder.

In another particularly advantageous embodiment, the loss function further measures compliance of the representations computed from the adversarial records with a predetermined constraint. In particular, such a constraint may be derived from knowledge of the fact that the examples are adversarials that have been crafted based on concrete training examples. Consideration of such knowledge improves convergence.

For example, the loss function may comprise a further contribution that measures how similar the distribution of the representations of the adversarial records is to the distribution of the representations of the training records. By analogy to the one-point Kolmogorov-Smirnov test explained above that tests whether a sample is drawn from a given, continuous distribution, a two-sample Kolmogorov-Smirnov test may determine whether two samples with empirical CDFs are drawn from the same distribution.

For example, the supremum of the distance between empirical cumulative distribution functions of the distributions of representations of training records on the one hand, and of adversarial records on the other hand, may be determined as the similarity between these distributions. In this manner, in the example presented above, the Kolmogorov-Smirnov loss may take the form

$$\mathcal{L}_{KS,k}^{\mathrm{adv}}\left(\mathbf{z}_{1,...,N}, \mathbf{z}_{1,...,N}^{\mathrm{adv}}\right)$$
$$= \frac{2}{3}\mathcal{L}_{KS,k}^{\mathrm{aug}}\left(\mathbf{z}_{1,...,N}, \mathbf{z}_{1,...,N}^{\mathrm{adv}}\right) + \frac{1}{3D}\sum_{d=1}^{D}\mathrm{MSE}_{n=1}^{N}\left(\bar{F}_d([\mathbf{z}_n]_d), \bar{F}_d^{\mathrm{adv}}\left(\left[\mathbf{z}_n^{\mathrm{adv}}\right]_d\right)\right).$$

Herein, $\bar{F}_d$ and $\bar{F}_d^{\mathrm{adv}}$ are the empirical CDFs of z and $\mathbf{z}^{\mathrm{adv}}$, respectively.

The correlations between the latent representations and their adversarial samples need to be considered separately. The degree or strength of the coupling is controlled by a coupling parameter $|\alpha| < 1$, wherein $\alpha = 1$ indicates the border condition where z = $\mathbf{z}^{\mathrm{adv}}$. The covariance loss of the extended model becomes

$$\mathcal{L}_{CV,k}^{adv}\left(\mathbf{z}_{1,...,N}, \mathbf{z}_{1,...,N}^{\mathrm{adv}}\right) = \frac{1}{2D^2}\sum_{l,d=1}^{2D}\left(\begin{bmatrix}\bar{\boldsymbol{\Sigma}} & \bar{\boldsymbol{\Sigma}}^{\mathrm{cross}} \\ \bar{\boldsymbol{\Sigma}}^{\mathrm{cross}} & \bar{\boldsymbol{\Sigma}}^{\mathrm{adv}}\end{bmatrix}_{l,d} - \begin{bmatrix}\boldsymbol{\Sigma}^{GMM} & \alpha\boldsymbol{\Sigma}^{GMM} \\ \alpha\boldsymbol{\Sigma}^{GMM} & \boldsymbol{\Sigma}^{GMM}\end{bmatrix}_{l,d}\right)^2.$$

The total training objective of the model may then take the form:

$$\mathcal{L}\left(\mathbf{x}_1, ..., \mathbf{x}_N, \mathbf{x}_1^{\mathrm{adv}}, ..., \mathbf{x}_N^{\mathrm{adv}}\right)$$
$$= \lambda_{REC}\mathcal{L}_{REC}(\mathbf{x}_1, ..., \mathbf{x}_N) + \lambda_{KS}\mathcal{L}_{KS,k}^{\mathrm{adv}}\left(\mathbf{z}_{1,...,N}, \mathbf{z}_{1,...,N}^{\mathrm{adv}}\right)$$
$$+ \lambda_{CV}\mathcal{L}_{CV,k}^{adv}\left(\mathbf{z}_{1,...,N}, \mathbf{z}_{1,...,N}^{\mathrm{adv}}\right).$$

Herein, $\mathcal{L}_{REC}$ designates the reconstruction loss of the autoencoder. The weights $\lambda_{REC}$, $\lambda_{KS}$ and $\lambda_{CV}$ can be calculated by taking the statistics of samples from the GMM prior.

In a further advantageous embodiment, the respective representations of the training records and/or the adversarial records are modified with a noise sample drawn from a random distribution before being supplied to the decoder. In this manner, the learned representations may be evenly spread out over the latent space. For example, the noise sample may be sampled from a Gaussian distribution. For example, $\mathbf{x}_{\varepsilon,n}$ may be the output of the decoder at $\mathbf{z}_n + \varepsilon_n$, where $\epsilon_n \sim \mathcal{N}(0, I_D)$. The reconstruction loss $\mathcal{L}_{REC}$ then equals the mean squared error between inputs $x_n$ and their noisy reconstructions $\mathbf{x}_{\varepsilon,n}$.

In a further advantageous embodiment, records of measurement data are provided to the encoder, so that representations of these records are obtained. These representations are provided to a trained or to-be-trained task head, so that a task result with respect to a given task is obtained. As discussed before, the encoder may then be trained as part of the autoencoder in an unsupervised manner, and only the task head may require a supervised training based on labelled data.

In particular, the given task may comprise:

• computing classification scores for the representations with respect to one or more classes of a given classification, and/or

- recognizing one or more objects whose presence the record of measurement data that has given rise to the representations indicates.

For these tasks, the encoder can serve to extract features from the measurement data, and these features can be processed by the task head. The robustness of the encoder against adversarial attack means that an adversarial modification is unlikely to change the representations so severely that the task result will be noticeably altered.

Thus, the invention also relates to the use of the trained autoencoder for processing records of measurement data into respective representations, and the use of a task head to process these representations into task results.

From the task result, an actuation signal may be computed. A vehicle, a vehicle assistance system, a quality inspection system, a surveillance system, and/or a medical imaging system, may then be actuated with the actuation signal. In this manner, the probability that the reaction of the actuated system to the actuation signal is appropriate in the situation captured in the measurement data is increased.

The method can be wholly or partially computer-implemented. The invention therefore also provides computer program, comprising machine-readable instructions that, when executed on one or more computers and/or compute instances, cause the computer, and/or the compute instances, to perform the method described above. Examples for compute instances include virtual machines, containers or serverless execution environments in a cloud. The invention also relates to a machine-readable data carrier and/or a download product with the computer program. A download product is a digital product with the computer program that may, e.g., be sold in an online shop for immediate fulfilment and download to one or more computers. The invention also relates to one or more compute instances with the computer program, and/or with the machine-readable data carrier and/or download product.

Further advantageous embodiments are illustrated in the following using Figures without any intention to limit the scope of the invention.

Description of the Figures

The Figures show:

Figure 1 Exemplary embodiment of the method 100 for training a deterministic autoencoder 1;

Figure 2 Regularization of representations 5a of training records 4a and representations 5b of adversarial records 4b to a common prior;

Figure 3 Improvement of the robustness against adversarial attacks in a classification application based on the FASHIONMNIST dataset.

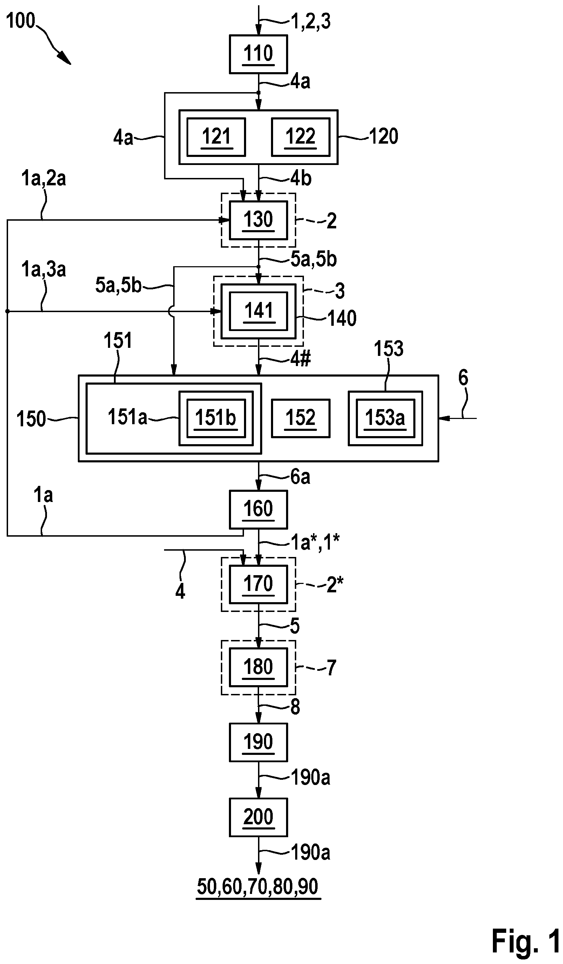

Figure 1 is a schematic flow chart of an exemplary embodiment of the method 100 for training a deterministic autoencoder 1. This autoencoder 1 comprises an encoder 2 that maps a record 4 of measurement data as input to a representation 5 in a latent space that has a lower dimensionality than the input 4 in a deterministic manner and a decoder 3 that reconstructs a record 4# of measurement data from the representation 5 in a deterministic manner.

In step 110, training records 4a of measurement data are provided.

In step 120, adversarial records 4b that do not belong to a distribution and/or domain to which the training records 4a of measurement data belong are determined.

According to block 121, at least one adversarial record 4b may be chosen such that

- it is similar to at least one concrete training record 4a, while
- its representation 5b is different from the representation 5b of that training record 4a.

According to block 122, at least one adversarial record 4b may be chosen from a ball of a given radius $\varepsilon$ around a concrete training record 4a such that its representation 5b is most dissimilar to the representation 5a of this concrete training record 4a.

In step 130, the encoder 2 processes both training records 4a and adversarial records 4b into respective representations 5a, 5b.

In step 140, the decoder 3 reconstructs records 4# of measurement data from the representations 5a, 5b.

According to block 141, the respective representations 5a, 5b of the training records 4a and/or the adversarial records 4b may be modified with a noise sample drawn from a random distribution before being supplied to the decoder 3.

In step 150, a loss function 6 is evaluated, which produces a value 6a. The loss function measures

- how similar the reconstructed records 4# of measurement data are to the corresponding training records 4a, respectively adversarial records 4b; and
- how similar distributions of the representations (5a, 5b) are to a given prior distribution.

According to block 151, the similarity between the distributions of the representations 5a, 5b and the given prior distribution may be obtained by measuring the similarity between respective empirical cumulative distribution functions.

According to block 151a, the similarity between the empirical cumulative distribution functions may be approximated by the similarity between respective marginal cumulative distribution functions. Ambiguities introduced by the approximation may then be dis-ambiguated, according to block 151b, by a further contribution to the loss function 6.

According to block 152, the loss function 6 may further measure compliance of the representations 5b computed from the adversarial records 4b with a predetermined constraint.

According to block 153, the loss function 6 may comprise a further contribution that measures how similar the distribution of the representations 5b of the adversarial records 4b is to the distribution of the representations 5a of the training records 4a.

According to block 153a, the supremum of the distance between empirical cumulative distribution functions of the distributions of representations 5a, 5b may be determined as the similarity between these distributions.

In step 160, parameters 1a that characterize the behavior of the autoencoder 1 are optimized towards the goal that, when processing further training records 4a and adversarial records 4b, the value 6a of the loss function 6 improves. These parameters 1a comprise parameters 2a that characterize the behavior of the encoder 2, as well as parameters 3a that characterize the behavior of the decoder 3. The finally optimized state of the parameters 1a is labelled with the reference sign 1a*. This state 1a* characterizes the behavior of the autoencoder 1 as a whole.

In step 170, records 4 of measurement data are provided to the trained encoder 2*, so that representations 5 of these records 4 are obtained.

In step 180, the representations 5 are provided to a trained or to-be-trained task head 7, so that the task head 7 produces a task result 8 with respect to a given task.

In step 190, an actuation signal 190a is computed from the task result 8.

In step 200, a vehicle 50, a vehicle assistance system 60, a quality inspection system 70, a surveillance system 80, and/or a medical imaging system 90, is actuated with the actuation signal 190a.

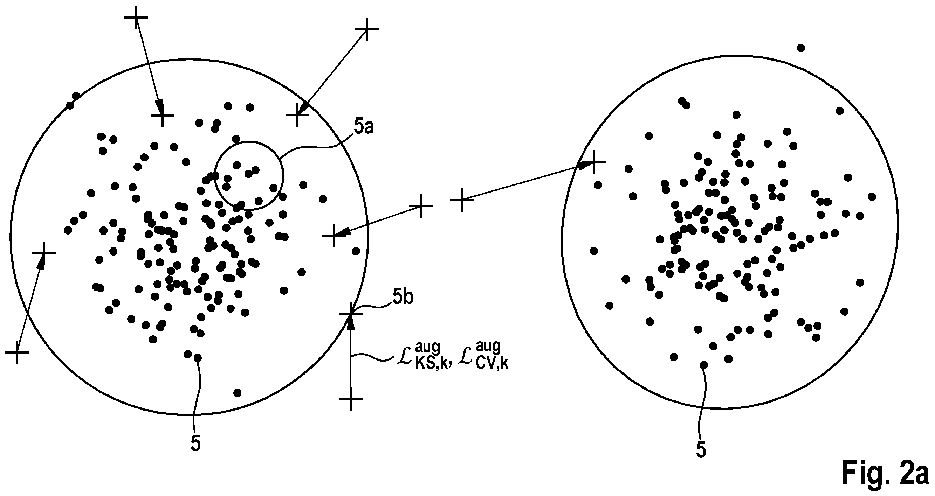

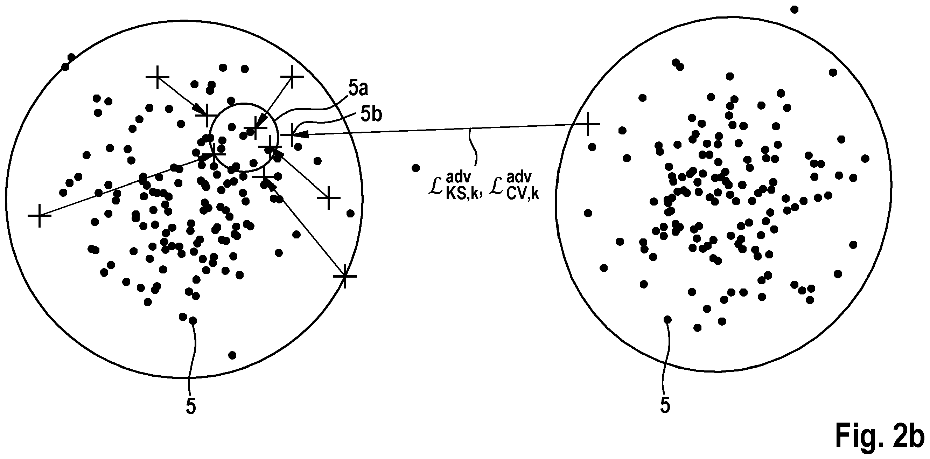

Figure 2 illustrates the effects of regularizing representations 5a of training records 4a and representations 5b of adversarial records 4b to a common prior.

In Figure 2a, in the latent space of representations 5 of records 4 of measurement data, the training records 4a become representations 5a in a small sub-space of the latent space. The loss functions $\mathcal{L}_{KS,k}^{\text{aug}}$ and $\mathcal{L}_{CV,k}^{\text{aug}}$ discussed above drive the representations 5b of adversarial records 4b towards the representations 5a. However, the representations 5b tend to explore regions not covered by the representations 5a of the training records 4a.

Figure 2b shows how this tendency is reduced by means of the loss functions $\mathcal{L}_{KS,k}^{\text{adv}}$ and $\mathcal{L}_{CV,k}^{adv}$ discussed above that implement the two-sample Kolmogorov-Smirnov test. The strong coupling by this regularization explicitly reduces the distance between the representations 5b of adversarial records 4b and the representations 5a of training records 4a.

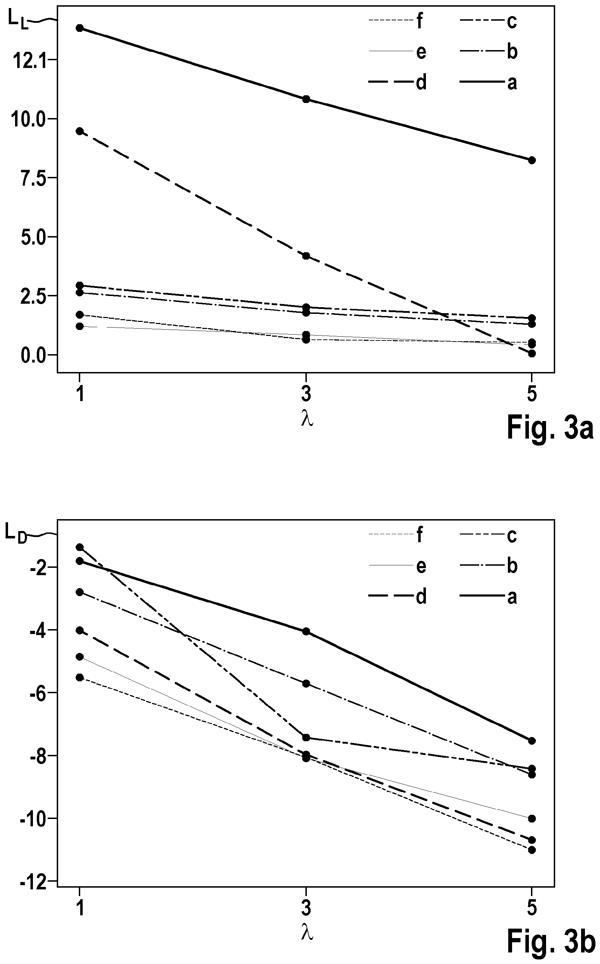

Figure 3 illustrates how the training method presented above reduces the susceptibility of an autoencoder 1 to an adversarial attack on input records 4 of measurement data. The data set used for this experiment is the publicly available FASHIONMNIST data set.

In Figure 3a, the attacker tries to add a noise perturbation $\delta$ to a record 4, $\boldsymbol{x}$ of measurement data to form an adversarial record 4b, such that the latent representation 5b, $\boldsymbol{z}_{x+\delta}$ of this perturbed input $\boldsymbol{x} + \delta$ is close to the latent representation $\boldsymbol{z}_t$ of a chosen target adversarial image $\boldsymbol{x}_t$. When a perturbation in latent space is passed to a task head 7, it translates to a perturbation of the final task result 8.

The attack involves solving the optimization problem

$$\arg\min_{\|\delta\|_2 \leq \lambda} \|\boldsymbol{z}_{x+\delta} - \boldsymbol{z}_t\|_2 = \arg\min_{\|\delta\|_2 \leq \lambda} L_L$$

with respect to the latent space attack loss function $L_L$. This loss is plotted in Figure 3a over the parameter $\lambda$, for an autoencoder 1 trained according to the method 100 presented above (curve a), and for differently trained autoencoders 1 (curves b to f).

In Figure 3b, the attacker perturbs the input record 4, x to cause a maximum damage in the reconstruction of the decoder 3, f of the autoencoder 1. This attack involves solving the optimization problem

$$\arg \min_{\|\delta\|_2 \leq \lambda} \|f(z_{x+\delta}) - f(z_x)\|_2 = \arg \min_{\|\delta\|_2 \leq \lambda} L_D$$

with respect to the maximum damage attack loss function $L_D$. Again, curve a represents the autoencoder 1 trained according to the method 100 presented above, and curves b to f represent differently trained autoencoders 1.

It is also noted that, when the representations 5 obtained from input records 4 are passed to a classifier as task head 7 to obtain classification scores as the final task result 8, the accuracy of the classification increases even in a "clean" situation where no adversarial attack is being attempted. The reason for this is that the adversarial training of the autoencoder 1 generally induces a higher effort of the autoencoder 1 towards a better generalization.

**Claims**

1. A method (100) for training a deterministic autoencoder (1) for records (4) of measurement data, wherein the autoencoder (1) comprises an encoder (2) that maps a record (4) of measurement data as input to a representation (5) in a latent space that has a lower dimensionality than the input (4) in a deterministic manner and a decoder (3) that reconstructs a record (4#) of measurement data from the representation (5) in a deterministic manner, the method (100) comprising the steps of:

   • providing (110) training records (4a) of measurement data;
   • determining (120) adversarial records (4b) that do not belong to a distribution and/or domain to which the training records (4a) of measurement data belong;
   • processing (130), by the encoder (2), both training records (4a) and adversarial records (4b) into respective representations (5a, 5b);
   • reconstructing (140), by the decoder (3), records (4#) of measurement data from the representations (5a, 5b);
   • evaluating (150) a loss function (6) that measures

      ∘ how similar the reconstructed records (4#) of measurement data are to the corresponding training records (4a), respectively adversarial records (4b); and
      ∘ how similar distributions of the representations (5a, 5b) are to a given prior distribution; and

   • optimizing (160) parameters (1a) that characterize the behavior of the autoencoder (1) towards the goal that, when processing further training records (4a) and adversarial records (4b), the value (6a) of the loss function (6) improves.

2. The method (100) of claim 1, wherein the similarity between the distributions of the representations (5a, 5b) and the given prior distribution is obtained (151) by measuring the similarity between respective empirical cumulative distribution functions.

3. The method (100) of claim 2, wherein the similarity between the empirical cumulative distribution functions is approximated (151a) by the similarity between respective marginal cumulative distribution functions.

4. The method (100) of claim 3, wherein ambiguities introduced by the approximation are dis-ambiguated (151b) by a further contribution to the loss function (6).

5. The method (100) of any one of claims 1 to 4, wherein at least one adversarial record (4b) is chosen (121) such that

   • it is similar to at least one concrete training record (4a), while
   • its representation (5b) is different from the representation (5b) of that training record (4a).

6. The method (100) of any one of claims 1 to 5, wherein at least one adversarial record (4b) is chosen (122) from a ball of a given radius $\varepsilon$ around a concrete training record (4a) such that its representation (5b) is most dissimilar to the representation (5a) of this concrete training record (4a).

7. The method (100) of any one of claims 1 to 6, wherein the loss function (6) further measures (152) compliance of the representations (5b) computed from the adversarial records (4b) with a predetermined constraint.

8. The method (100) of any one of claims 1 to 7, wherein the loss function (6) comprises (153) a further contribution that measures how similar the distribution of the representations (5b) of the adversarial records (4b) is to the distribution of the representations (5a) of the training records (4a).

9. The method (100) of claim 8, wherein the supremum of the distance between empirical cumulative distribution functions of the distributions of representations (5a, 5b) is determined (153a) as the similarity between these distributions.

10. The method (100) of any one of claims 1 to 9, wherein the respective representations (5a, 5b) of the training records (4a) and/or the adversarial records (4b) are modified (141) with a noise sample drawn from a random distribution before being supplied to the decoder (3).

11. The method (100) of any one of claims 1 to 10, further comprising:

   • providing (170) records (4) of measurement data to the encoder (2*), thereby obtaining representations (5) of these records (4); and
   • providing (180) these representations (5) to a trained or to-be-trained task head (7), thereby obtaining a task result (8) with respect to a given task.

12. The method (100) of claim 11, wherein the given task comprises

   • computing classification scores for the representations (5) with respect to one or more classes of a given classification, and/or
   • recognizing one or more objects whose presence the record (4) of measurement data that has given rise to the representations (5) indicates.

13. The method (100) of any one of claims 11 to 12, further comprising:

   • computing (190) an actuation signal (190a) from the task result (8); and
   • actuating (200) a vehicle (50), a vehicle assistance system (60), a quality inspection system (70), a surveillance system (80), and/or a medical imaging system (90), with the actuation signal (190a).

14. A computer program, comprising machine-readable instructions that, when executed on one or more computers and/or compute instances, cause the one or more computers and/or compute instances to perform the method (100) of any one of claims 1 to 13.

15. A non-transitory machine-readable data carrier, and/or a download product, with the computer program of claim 14.

16. One or more computers and/or compute instances with the computer program of claim 14, and/or with the non-transitory machine-readable data carrier and/or download product of claim 15.


**Amended claims in accordance with Rule 137(2) EPC.**

1. A computer-implemented method (100) for training a deterministic autoencoder (1) for records (4) of measurement data, wherein the autoencoder (1) comprises an encoder (2) that maps a record (4) of measurement data as input to a representation (5) in a latent space that has a lower dimensionality than the input (4) in a deterministic manner and a decoder (3) that reconstructs a record (4#) of measurement data from the representation (5) in a deterministic manner, the method (100) comprising the steps of:

   • providing (110) training records (4a) of measurement data;
   • determining (120) adversarial records (4b) that do not belong to a distribution and/or domain to which the training records (4a) of measurement data belong;
   • processing (130), by the encoder (2), both training records (4a) and adversarial records (4b) into respective representations (5a, 5b);
   • reconstructing (140), by the decoder (3), records (4#) of measurement data from the representations (5a, 5b);
   • evaluating (150) a loss function (6) that measures

      ◦ how similar the reconstructed records (4#) of measurement data are to the corresponding training records

(4a), respectively adversarial records (4b); and
- how similar distributions of the representations (5a, 5b) are to a given prior distribution; and

- optimizing (160) parameters (1a) that characterize the behavior of the autoencoder (1) towards the goal that, when processing further training records (4a) and adversarial records (4b), the value (6a) of the loss function (6) improves.

2. The method (100) of claim 1, wherein the similarity between the distributions of the representations (5a, 5b) and the given prior distribution is obtained (151) by measuring the similarity between respective empirical cumulative distribution functions.

3. The method (100) of claim 2, wherein the similarity between the empirical cumulative distribution functions is approximated (151a) by the similarity between respective marginal cumulative distribution functions.

4. The method (100) of claim 3, wherein ambiguities introduced by the approximation are dis-ambiguated (151b) by a further contribution to the loss function (6).

5. The method (100) of any one of claims 1 to 4, wherein at least one adversarial record (4b) is chosen (121) such that

- it is similar to at least one concrete training record (4a), while
- its representation (5b) is different from the representation (5b) of that training record (4a).

6. The method (100) of any one of claims 1 to 5, wherein at least one adversarial record (4b) is chosen (122) from a ball of a given radius $\varepsilon$ around a concrete training record (4a) such that its representation (5b) is most dissimilar to the representation (5a) of this concrete training record (4a).

7. The method (100) of any one of claims 1 to 6, wherein the loss function (6) further measures (152) compliance of the representations (5b) computed from the adversarial records (4b) with a predetermined constraint.

8. The method (100) of any one of claims 1 to 7, wherein the loss function (6) comprises (153) a further contribution that measures how similar the distribution of the representations (5b) of the adversarial records (4b) is to the distribution of the representations (5a) of the training records (4a).

9. The method (100) of claim 8, wherein the supremum of the distance between empirical cumulative distribution functions of the distributions of representations (5a, 5b) is determined (153a) as the similarity between these distributions.

10. The method (100) of any one of claims 1 to 9, wherein the respective representations (5a, 5b) of the training records (4a) and/or the adversarial records (4b) are modified (141) with a noise sample drawn from a random distribution before being supplied to the decoder (3).

11. The method (100) of any one of claims 1 to 10, further comprising:

- providing (170) records (4) of measurement data to the encoder (2*), thereby obtaining representations (5) of these records (4); and
- providing (180) these representations (5) to a trained or to-be-trained task head (7), thereby obtaining a task result (8) with respect to a given task.

12. The method (100) of claim 11, wherein the given task comprises

- computing classification scores for the representations (5) with respect to one or more classes of a given classification, and/or
- recognizing one or more objects whose presence the record (4) of measurement data that has given rise to the representations (5) indicates.

13. The method (100) of any one of claims 11 to 12, further comprising:

- computing (190) an actuation signal (190a) from the task result (8); and

• actuating (200) a vehicle (50), a vehicle assistance system (60), a quality inspection system (70), a surveillance system (80), and/or a medical imaging system (90), with the actuation signal (190a).

14. A computer program, comprising machine-readable instructions that, when executed on one or more computers and/or compute instances, cause the one or more computers and/or compute instances to perform the method (100) of any one of claims 1 to 13.

15. A non-transitory machine-readable data carrier, and/or a download product, with the computer program of claim 14.

16. One or more computers and/or compute instances with the computer program of claim 14, and/or with the non-transitory machine-readable data carrier and/or download product of claim 15.

Fig. 1

Fig. 2a

5

5a

5b

$\mathcal{L}^{aug}_{KS,k}, \mathcal{L}^{aug}_{CV,k}$

Fig. 2b

$\mathcal{L}^{adv}_{KS,k}, \mathcal{L}^{adv}_{CV,k}$

5

5a
5b

5

Fig. 3a

Fig. 3b

**EUROPEAN SEARCH REPORT**

Application Number

EP 22 19 2386

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Saseendran Amrutha ET AL: "Shape your Space: A Gaussian Mixture Regularization Approach to Deterministic Autoencoders", , 6 December 2021 (2021-12-06), pages 1-24, XP093018990, Retrieved from the Internet: URL:https://proceedings.neurips.cc/paper/2021/hash/3c057cb2b41f22c0e740974d7a428918-Abstract.html [retrieved on 2023-01-30] * abstract; Sections 1 and 3-5; Appendix A * | 1-16 | INV. G06N3/0455 G06N3/088 G06N3/094 G06N7/01 |
| A | ERIC WONG ET AL: "Fast is better than free: Revisiting adversarial training", ARXIV.ORG, CORNELL UNIVERSITY LIBRARY, 201 OLIN LIBRARY CORNELL UNIVERSITY ITHACA, NY 14853, 12 January 2020 (2020-01-12), XP081577572, * abstract; Sections 1, 3, and 4 * | 1-16 | |
| A | JERNEJ KOS ET AL: "Adversarial examples for generative models", ARXIV.ORG, CORNELL UNIVERSITY LIBRARY, 201 OLIN LIBRARY CORNELL UNIVERSITY ITHACA, NY 14853, 22 February 2017 (2017-02-22), XP080748153, * abstract; Sections 4 and 5 * | 1-16 | TECHNICAL FIELDS SEARCHED (IPC) G06N |

-/--

The present search report has been drawn up for all claims

| Place of search | Date of completion of the search | Examiner |
|---|---|---|
| The Hague | 2 February 2023 | Klasen, TJ |

**EUROPEAN SEARCH REPORT**

Application Number

EP 22 19 2386

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Anonymous: "machine learning – Adding random noise to latent representation increase the accuracy in the autoencoder – Cross Validated", , 1 April 2021 (2021-04-01), pages 1-3, XP093020091, Retrieved from the Internet: URL:https://stats.stackexchange.com/questions/452267/adding-random-noise-to-latent-representation-increase-the-accuracy-in-the-autoen [retrieved on 2023-02-02] * page 1 – page 3 * ----- | 10 | |
| A | DOR BANK ET AL: "Autoencoders", ARXIV.ORG, CORNELL UNIVERSITY LIBRARY, 201 OLIN LIBRARY CORNELL UNIVERSITY ITHACA, NY 14853, 3 April 2021 (2021-04-03), XP081923264, * abstract; Section 4.2 * ----- | 1-15 | |

TECHNICAL FIELDS SEARCHED (IPC)

The present search report has been drawn up for all claims

| Place of search | Date of completion of the search | Examiner |
|---|---|---|
| The Hague | 2 February 2023 | Klasen, TJ |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)